Europäisches Patentamt

European Patent Office

Office européen des brevets

(19)

(11) Veröffentlichungsnummer : **0 152 568**
**B1**

# EUROPÄISCHE PATENTSCHRIFT

(12)

(45) Veröffentlichungstag der Patentschrift : 09.09.87

(51) Int. Cl.⁴ : **F 16 D   3/68**, B 61 C   9/44

(21) Anmeldenummer : 84114802.6

(22) Anmeldetag : 05.12.84

(54) **Kardanische Doppelkupplung.**

(30) Priorität : 04.02.84 DE 3403910

(43) Veröffentlichungstag der Anmeldung :
28.08.85 Patentblatt 85/35

(45) Bekanntmachung des Hinweises auf die Patenterteilung : 09.09.87 Patentblatt 87/37

(84) Benannte Vertragsstaaten :
AT BE CH DE FR GB IT LI NL

(56) Entgegenhaltungen :
DE-A- 1 600 028
DE-A- 2 353 256
DE-A- 2 555 031
DE-C-   879 632
DE-C-   917 345
FR-A-   816 962
FR-A- 2 025 938
US-A- 3 094 853
US-A- 3 859 929

(73) Patentinhaber : Thyssen Industrie AG
Am Thyssenhaus 1
D-4300 Essen 1 (DE)

(72) Erfinder : Piepenbreier, Ernst
Wintgenstrasse 15
D-4300 Essen 16 (DE)

(74) Vertreter : Jung, Hermann L., Dipl.-Chem. et al
Postfach 1728 Augusta-Allee 10
D-6380 Bad Homburg v.d.H. (DE)

EP 0 152 568 B1

## Beschreibung

Die Erfindung bezieht sich auf eine kardanische Doppelkupplung zwischen einer Hohlwelle und einer durch diese gehenden Welle bestehend aus einer hohlstumpfförmigen, die Welle mit Spiel umschließenden Zwischenwelle und an deren Enden angeordneten elastischen Gelenkkupplungen, deren einander zugekehrte Hälften eine gemeinsame Nabe in Form der Zwischenwelle enthalten und deren Außenhälften der Hohlwelle bzw. der Welle angepaßte Naben und von diesen sternförmig ausgehende Arme aufweisen, die in Umfangsrichtung beiderseitig durch an vorgespannte Gummiblöcke anvulkanisierte Platten eingeschlossen sind.

Eine derartige Kupplung ist durch die DE-A-23 53 256 bekannt (Fig. 2). Sie erreicht die erforderliche kardanische Beweglichkeit dadurch, daß zwischen den Außenhälften der Kupplung zwei Gelenkebenen hintereinander geschaltet sind. Dabei besteht jede Kupplungsebene aus einzelnen, gleichmäßig auf dem Umfang der Kupplung angeordneten Gummipaketen. Ihre Einbaulage ist so vorgesehen, daß die gleiche Anzahl von Armen sowohl von der Nabe der Außenhälften als auch vom zugehörigen Ende der Zwischenwelle in den einzelnen Gelenkebenen sternförmig ineinandergreifen. Dabei entstehen Lücken, in die einzelnen Gummipakete unter Vorspannung eingebaut werden. Vorspannungswege, Einbaulage und Gummipaketfedercharakteristik sind so aufeinander abgestimmt, daß die Summe aller Kräfte in eingebautem Zustand Null ist. Es verbleibt somit keine umlaufende Restkraft, die zu Unwucht führen könnte. Die Dimensionierung dieser bekannten Doppelkupplung ist außer vom einzelnen Gummipaket, das auf die gleichzeitigen Forderungen nach Drehelastizität und Rückstellkraft abgestimmt ist, abhängig von der Belastbarkeit der einzelnen Arme.

Auf Grund der vorliegenden Geometrie muß ein relativ hochwertiges Gußmaterial wie Stahlguß verwendet werden. Dies wiederum führt dazu, daß die Doppelkupplung relativ schwer ist.

Der Erfindung liegt die Aufgabe zugrunde, eine Doppelkupplung der eingangs genannten Art leichter zu gestalten und zugleich fertigungstechnisch einfacher auszubilden.

Die Erfindung besteht darin, daß jeder Gummiblock außer den Platten aus zwei in der Seitenansicht der Kupplung spiegelbildlichen Gummihälften und einem dazwischenliegenden mit der Spitze der Kupplungsmitte zugewandten Keil besteht, der die Gummihälften durch Vulkanisation festhält und mit der Zwischenwelle lösbar verbunden ist.

Als Elastomer-Einheit für Links- und Rechtsdrehung ist nunmehr ein einziger Gummiblock mit zwei jeweils für sich wirksamen Gummiteilen vorhanden. Der Stand der Technik sah hierfür zwei Einzelpakete vor. Gegenüber ihm sind bei der Erfindung das etwaige Gummivolumen und die erforderlichen Vulkanisationsflächen unverändert. Die zwei nebeneinander angeordneten Gummiteile der Elastomer-Einheit sind allerdings mit ihren Innenseiten direkt an einen Metallkeil anvulkanisiert, um den Gummiblock zu bilden. Die anvulkanisierten Platten an den Außenseiten des Gummiblockes sind erhalten geblieben. Da nunmehr die innenliegenden Platten des Standes der Technik entfallen sind, ist die Gesamteinheit in der Umfangsrichtung um zwei Plattenstärke kürzer geworden. Die Gummiblöcke können daher nach innen verschoben und der Durchmesser der Doppelkupplung reduziert werden, bis die Festigkeiten der Teile sich etwa wie bei dem Stand der Technik einstellen. Die Doppelkupplung wird somit leichter. Da andererseits die Keile zu den Innenhälften der Doppelkupplung gehören, von ihnen aber infolge der Schraubenbefestigung getrennt sind, kann die Zwischenwelle ohne zwischen Gummipakete greifende Arme als reiner Drehteil gefertigt werden. Dadurch wird die Herstellung billiger.

Der Wegfall der zwei innenliegenden anvulkanisierten Platten kann aber bei Beibehaltung der Abmaße der bekannten Kupplung auch zu der Verdickung der Arme führen. Diese Maßnahme ermöglicht den Einsatz einer Leichtmetallegierung. Unter Beibehaltung der gleichen Sicherheiten ist dadurch eine Gewichtseinsparung von 40 bis 60 % zu erreichen.

Vorteilhaft verlaufen die Platten parallel zu den Vulkanisationsflächen der Keile, um gleich starke Gummihälften zu erzielen. Die Platten können aber zweckmäßig auch in einer durch die Achse der Kupplung verlaufenden Ebene liegen, damit die Gummihälften in Achsrichtung gesehen selbst keilförmig sind und eine andere Lastverteilung hervorrufen. In beiden Fällen stehen die anvulkanisierten äußeren Platten keilförmig zueinander, so daß die Gummiblöcke etwa zur Hälfte bis zu 2/3 ihrer radialen Höhe eingesetzt werden können, bis sie zur leichten Anlage kommen. Mit Hilfe einer Montagevorrichtung, die radialen Druck auf die Gummiblöcke ausübt, kann jetzt die Endmontage leichter erfolgen. Dabei können zweckmäßig die Gummiblöcke im durch die Achse der Kupplung gehenden Schnitt selbst eine Keilform aufweisen.

Um die Montage weiter zu erleichtern, weisen vorteilhaft die Platten umgebogene, die Arme umfassende Ränder auf. Dabei sind zweckmäßig die Platten je zweier benachbarter Gummiblöcke durch am Arm liegende Arretierungskeile und durch eine den Arm und die Arretierungskeile durchsetzende Schraube radial gehalten.

Es hat sich als besonders vorteilhaft erwiesen, die Doppelkupplung zum Verbinden einer in einem Drehgestell oder Rahmen gelagerten Achse eines Achsantriebes für Schienenfahrzeuge mit einer die Achse mit Spiel umschließenden, abtreibenden Hohlwelle eines Getriebes einzusetzen, das an der Stirnseite eines in Fahrtrichtung liegenden Elektromotors angeflanscht und zusammen mit dem letzteren im Drehgestell oder Rahmen befestigt ist.

Im folgenden wird die Erfindung anhand von in den Zeichnungen schematisch dargestellten Ausführungsbeispielen näher erläutert.

Es zeigen

Figur 1 eine Doppelkupplung in Achsrichtung gesehen, zum Teil im Schnitt nach der Linie I-I der Figur 2 ;

Figur 2 einen Schnitt nach der Linie II-II der Figur 1 ;

Figur 3 einen Schnitt nach der Linie III-III der Figur 1 ;

Figur 4 einen Schnitt nach der Linie IV-IV der Figur 1 und

Figur 5 einen Doppelachsantrieb teilweise im Schnitt von oben gesehen.

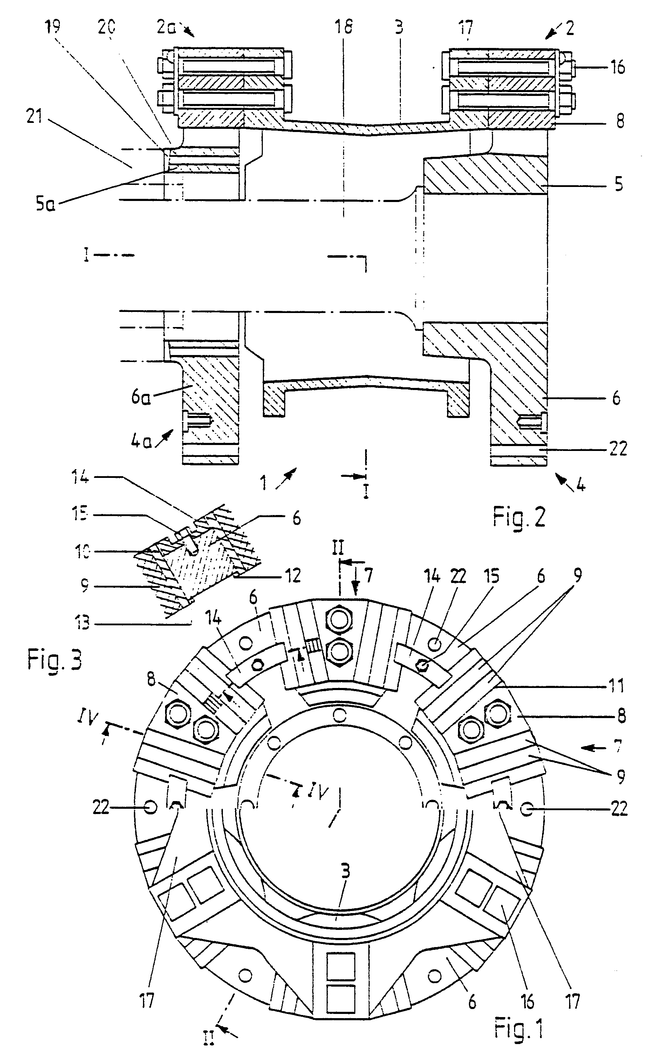

Mit 1 ist eine kardanische Doppelkupplung bezeichnet, die außer einer Winkelabweichung der mit ihr verbundenen Wellen auch einen parallelen Achsversatz gestattet. Die Doppelkupplung 1 besteht nach den Figuren 1 und 2 aus zwei elastischen Gelenkkupplungen 2 und 2a, die miteinander durch eine hohlstumpfförmige Zwischenwelle 3 verbunden sind. Jede der Gelenkkupplungen 2 bzw. 2a enthält eine Außenhälfte 4 bzw. 4a mit einer Nabe 5 bzw. 5a, von der strahlenförmig mehrere Arme 6 ausgehen (dargestellt sind sechs). Zwischen den Armen 6 sind innerhalb eines Kreisringes Gummiblöcke 7 mit Vorspannung eingesetzt. Diese weisen eine Kreissegmentform auf und sind so aufgebaut, daß an einem mittleren Keil 8, der mit seinem schmalen Ende der Kupplungsmitte zugekehrt ist, symmetrisch Gummihälften 9 anvulkanisiert sind, die an ihren freien Endflächen ebenfalls durch Vulkanisation und in symmetrischer Anordnung durch Platten 10 abgeschlossen sind.

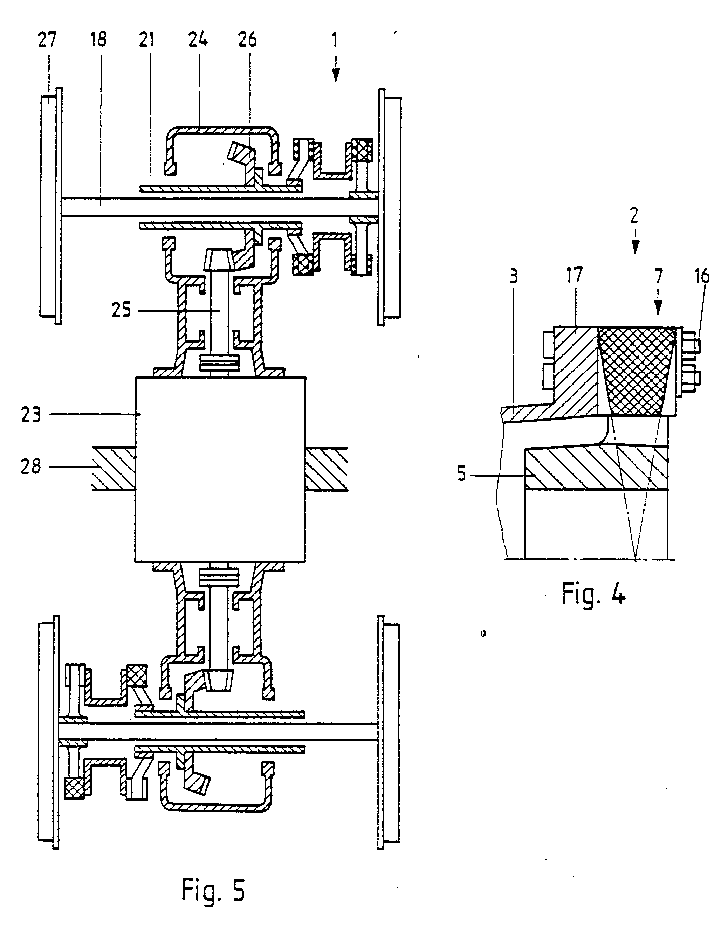

Während die Vulkanisationsflächen 11 der Keile 8 und die Platten 10 stets in zu der Kupplungsachse parallelen Ebene liegen, verlaufen die Platten 10 in Figur 1 parallel zu den Vulkanisationsflächen 11, so daß dadurch gleich starke Gummihälften 9 entstehen. Die Neigungen können aber in nicht dargestellter Weise auch so gewählt werden, daß sowohl die Vulkanisationsflächen 11 als auch die Ebene der Platten 10 sich in der Kupplungsachse schneiden, so daß diesmal selbst die Gummihälften 9 keilförmig sind. Dadurch ergibt sich eine andere Lastverteilung im Gummimaterial. In diesem Fall können die Gummiblöcke 7 auch im Radialschnitt gemäß Figur 4 keilförmig sein derart, daß ihre symmetrischen Keilflanken sich in einem Punkt der Kupplungsachse zusammentreffen.

Nach Fig. 3 weist jede Platte 10 mindestens einen umgebogenen Rand 12 auf, der den anliegenden Arm 6 seitlich umfaßt und mit einer Ausnehmung 13 versehen ist. In diese greift jeweils ein Arretierungskeil 14 ein, der mittels einer den Arm 6 durchsetzenden Schraube 15 an den Seitenflächen befestigt ist. Dadurch sind die Gummiblöcke 7 radial an den Armen 6 gehalten.

Die Keile 8 sind in der Radiallinie der Kupplung jeweils mittels zweier Schrauben 16 mit entsprechenden Pratzen 17 der Zwischenwelle 3 derart verbunden, daß zwischen den verbundenen Teilen Reibschluß entsteht. Dadurch entstehen für die Gelenkkupplungen 2 und 2a an sich die Innenhälften, die mittels der als Naben dienenden Zwischenwelle 3 ineinander übergehen, wie eingangs erwähnt.

Während die Nabe 5 auf einer massiven Welle 18 sitzt, ist die Nabe 5a mittels einer Stirnverzahnung 19 und durch Durchgangslöcher 20 gesteckter Schrauben mit einer Hohlwelle 21 verbunden. Die letztere und die durch sie gehende Welle 18 können einander gegenüber in Abhängigkeit von den konstruktiven Möglichkeiten über die Doppelkupplung 1 kardanisch bewegen oder einen Achsversatz haben.

Oberhalb der Schrauben 15 in den Armen 6 sind Löcher 22 vorhanden, in denen eine nicht dargestellte Montagevorrichtung befestigt werden kann. Diese drückt radial gleichzeitig auf die Platten 10 und den Keil 8 eines einzelnen Gummiblockes 7, bis einerseits am Keil 8 die beiden Schrauben 16 montiert werden können und andererseits die Platten 10 so weit heruntergedrückt sind, daß die erforderliche Vorspannung entsteht und die Arretierungskeile 14 eingelegt und angeschraubt werden können.

Figur 5 zeigt die Anwendung der Doppelkupplung 1 in einem Doppelachsantrieb für Schienenfahrzeuge. Mit 23 ist ein längs zur Fahrtrichtung liegender Elektromotor bezeichnet, an dessen Stirnseite je ein Winkelgetriebe 24 angeflanscht ist, welches mit Hilfe von Kegelrädern 25 und 26 die Hohlwellen 21 antreibt, die die Welle 18 der Laufräder 27 mit Spiel umgeben. Der Elektromotor 23 ist zusammen mit den Winkelgetrieben 24 durch elastische Aufhängungen 28 mit dem Drehgestellrahmen verbunden. Jede Hohlwelle 21 ist an einem Ende mit der zugehörigen Welle 18 über die Doppelkupplung 1 verbunden, wie vorstehend beschrieben.

Bezugszeichenliste

| 1 | Doppelkupplung |
| 2, 2a | Gelenkkupplung |
| 3 | Zwischenwelle |
| 4, 4a | Außenhälfte |
| 5, 5a | Nabe |
| 6 | Arm |
| 7 | Gummiblock |
| 8 | Keil |
| 9 | Gummihälfte |
| 10 | Platte |
| 11 | Vulkanisationsfläche |
| 12 | Rand |
| 13 | Ausnehmung |
| 14 | Arretierungskeil |
| 15 | Schraube |
| 16 | Schraube |
| 17 | Pratze |
| 18 | Welle |
| 19 | Stirnverzahnung |
| 20 | Durchgangsloch |
| 21 | Hohlwelle |

22  Loch
23  Elektromotor
24  Winkelgetriebe
25  Kegelrad
26  Kegelrad
27  Laufrad
28  Aufhängung

**Patentansprüche**

1. Kardanische Doppelkupplung (1) zwischen einer Hohlwelle (21) und einer durch diese gehenden Welle (18) bestehend aus einer hohlstumpfförmigen, die Welle mit Spiel umschließenden Zwischenwelle (3) und an deren Enden angeordneten elastischen Gelenkkupplungen (2, 2a), deren einander zugekehrte Hälften eine gemeinsame Nabe in Form der Zwischenwelle enthalten und deren Außenhälften (4, 4a) der Hohlwelle bzw. der Welle angepaßte Naben (5, 5a) und von diesen sternförmig ausgehende Arme (6) aufweisen, die in Umfangsrichtung beiderseitig durch an vorgespannte Gummiblöcke (7) anvulkanisierte Platten (10) eingeschlossen sind, dadurch gekennzeichnet, daß jeder Gummiblock (7) außer den Platten (10) aus zwei in der Seitenansicht der Kupplung spiegelbildlichen Gummihälften (9) und einem dazwischenliegenden, mit der Spitze der Kupplungsmitte zugewandten Keil (8) besteht, der die Gummihälften durch Vulkanisation festhält und mit der Zwischenwelle (3) lösbar verbunden ist.

2. Doppelkupplung nach Anspruch 1, dadurch gekennzeichnet, daß sie mit Ausnahme der Gummihälften (9) aus Leichtmetallegierung besteht.

3. Doppelkupplung nach Anspruch 1 oder 2, dadurch gekennzeichnet, daß die Platten (10) parallel zu den Vulkanisationsflächen (11) der Keile (8) verlaufen.

4. Doppelkupplung nach Anspruch 1 oder 2, dadurch gekennzeichnet, daß die Platten (10) in einer durch die Achse der Kupplung verlaufenden Ebene liegen.

5. Doppelkupplung nach Anspruch 4, dadurch gekennzeichnet, daß die Gummiblöcke (7) im durch die Achse der Kupplung gehenden Schnitt eine Keilform aufweisen.

6. Doppelkupplung nach einem der Ansprüche 1 bis 4, gekennzeichnet durch umgebogene, die Arme (6) umfassende Ränder (12) der Platten (10).

7. Doppelkupplung nach Anspruch 6, dadurch gekennzeichnet, daß die Platten (10) je zweier benachbarter Gummiblöcke (7) durch am Arm (6) liegende Arretierungskeile (14) und durch eine den Arm und die Arretierungskeile durchsetzende Schraube (15) radial gehalten sind.

8. Doppelkupplung nach einem der vorhergehenden Ansprüche zum Verbinden einer in einem Drehgestell oder Rahmen gelagerten Achse (18) eines Achsantriebes für Schienenfahrzeuge mit einer die Achse mit Spiel umschließenden, abtreibenden Hohlwelle (21) eines Getriebes (24), das an der Stirnseite eines in Fahrtrichtung liegenden Elektromotors (23) angeflanscht und zusammen mit dem letzteren im Drehgestell oder Rahmen befestigt ist.

**Claims**

1. Double universal joint (1) between a hollow shaft (21) and a shaft (18) extending through the latter, comprising an intermediate shaft (3) of hollow truncated shape surrounding the shaft with clearance and also elastic articulated joint couplings (2, 2a) which are arranged at the ends of the said intermediate shaft and whose mutually facing halves have a common hub in the form of the intermediate shaft and whose outer halves (4, 4a) have hubs (5, 5a) adapted to the hollow shaft and through shaft, and also have arms (6) which extend in radiating formation from said hubs and which are enclosed at both sides in the peripheral direction by plates (10) vulcanised on to preloaded rubber blocks (7), characterised in that each rubber block (7) comprises besides the plates (10) two rubber half-elements (9) in mirrorimage relationship in side view on to the joint and also a wedge (8) which is situated between said half-elements and which is directed with its pointed end towards the centre of the joint, said wedge holding the rubber half-elements securely by vulcanisation and being releasably connected to the intermediate shaft (3).

2. Double joint according to claim 1, characterised in that with the exception of the rubber half-elements (9) it consists of light metal alloy.

3. Double joint according to claim 1 or 2, characterised in that the plates (10) extend parallel to the vulcanisation surfaces (11) of the wedges (8).

4. Double joint according to claim 1 or 2, characterised in that the plates (10) are situated in a plane which extends through the axis of the joint.

5. Double joint according to claim 4, characterised in that the rubber blocks (7) are wedge-shaped as seen in a section view taken through the axis of the joint.

6. Double joint according to one of claims 1 to 4, characterised by bent-over edges (12) at the plates (10), which engage about the arms (6).

7. Double joint according to claim 6, characterised in that the plates (10) of each two adjacently situated rubber blocks (7) are held radially by arresting wedges (14) situated on the arm (6) and by a screw (15) which extends through the arm and the arresting wedges.

8. Double joint according to one of the preceding claims for connecting an axle (18) of an axle drive for rail vehicles, which axle is mounted in a bogie or frame, to a drive-output hollow shaft (21) of a transmission (24), said hollow shaft surrounding the axle with some clearance, said transmission being flanged-mounted on the end face of an electric motor (23) disposed in the direction of travel, and being secured together with the latter motor in the bogie or frame.

**Revendications**

1. Accouplement double à cardan (1) entre un arbre creux (21) et un arbre (18) qui traverse le précédent, constitué par un arbre intermédiaire (3) tronconique, creux, entourant avec jeu les deux autres et des accouplements articulés (2, 2a) élastiques, disposés à leurs extrémités, dont les moitiés tournées l'une vers l'autre comportent un moyen commun sous forme de l'arbre intermédiaire et dont les moitiés externes (4, 4a) possèdent des moyeux (5, 5a) adaptés à l'arbre creux et à l'autre arbre et des bras (6) partant en étoile de ces moyeux et qui sont enserrés des deux côtés de la direction périphérique par des plaquettes (10) vulcanisées sur des blocs de caoutchouc (7) précontraints, caractérisé par le fait que chaque bloc de caoutchouc (7) est constitué, en dehors des plaquettes (10), par deux moitiés de caoutchouc (9), qui vues de côté de l'accouplement, sont symétriques l'une de l'autre par rapport à un plan, et par un coin (8) situé entre elles, à pointe dirigée vers le centre de l'accouplement, qui maintient, par vulcanisation, les moitiés de caoutchouc et qui est relié de façon amovible à l'arbre intermédiaire (3).

2. Accouplement double selon la revendication 1, caractérisé par le fait qu'il est constitué, à l'exception des moitiés de caoutchouc (9), en alliage léger.

3. Accouplement double selon la revendication 1 ou 2, caractérisé par le fait que les plaquettes (10) s'étendent parallèlement aux faces de vulcanisation (11) du coin (8).

4. Accouplement double selon la revendication 1 ou 2, caractérisé par le fait que les plaquettes (10) sont situées dans un plan passant par l'axe de l'accouplement.

5. Accouplement double selon la revendication 4, caractérisé par le fait que les blocs de caoutchouc (7) présentent, en coupe passant par l'axe de l'accouplement, une forme de coin.

6. Accouplement double selon l'une des revendications 1 à 4, caractérisé par des bords (12) des plaquettes (10), enserrant les bras (6), recourbés.

7. Accouplement double selon la revendication 6, caractérisé par le fait que les plaquettes (10) de chaque couple de blocs de caoutchouc (7) voisins, sont maintenues radialement par des coins d'arrêt (14) situés sur le bras (6) et par une vis (15) traversant les coins d'arrêt.

8. Accouplement double selon l'une des revendications précédentes pour relier un essieu (18) monté dans un bogie ou châssis d'un mécanisme d'entraînement d'essieu pour véhicules sur rails muni d'un arbre creux (21), entraînant l'essieu et l'entourant avec du jeu, d'une boîte de vitesse bridée à angle droit sur la face latérale d'un moteur électrique (23) disposé dans la direction du déplacement et fixée avec ce dernier sur le bogie ou châssis.

Fig. 2

Fig. 3

Fig. 1

Fig. 5

Fig. 4